# EUROPEAN PATENT APPLICATION

(11) **EP 1 753 258 A1**
(43) Date of publication of application: **14.02.2007**
(21) Application number: 05745881.2
(22) Date of filing: 31.05.2005
(51) Int. Cl.: H04Q 7/38, H04M 1/66

(54) **MOBILE TERMINAL DEVICE, MOBILE FUNCTION LIMIT SYSTEM, FUNCTION LIMIT METHOD, AND RECORDING MEDIUM**

(30) Priority: 04.06.2004 JP 2004166967
(71) Applicant: MATSUSHITA ELECTRIC INDUSTRIAL CO., LTD., Osaka 571-8501 (JP)
(72) Inventor: MATSUO, Masatoshi, Matsushita Elect. Ind. Co.,Ltd, Chuo-ku, Osaka-shi, Osaka 540-6319 (JP)
(74) Representative: Pautex Schneider, Nicole Véronique
(86) International application number: PCT/JP2005/009927
(87) International publication number: WO 2005/120120

(57) **Abstract**

A mobile-object-function restriction system executes function restriction in a function-limited area, gives benefit in compensation for the executed function restriction, and releases the function restriction in emergency. In the system, a transmitting device (200) transmits, to a mobile-object terminal device (100), mobile-object information including function restriction information, emergency information for releasing function restriction in emergency, and benefit information to give benefit in compensation for the executed function restriction. A receiving unit (10) receives the mobile-object information and stores it to an information storage unit (50). A function restriction unit (60), upon receipt of function start direction issued by a functional means, permits or restricts the execution of the function concerned, with reference to the function restriction information and the emergency information stored in the information storage unit (50). The receiving unit determines and accumulates benefit chosen from the benefit information in compensation for the executed function restriction.

## Description

### Technical Field

The present invention relates to a control unit and method thereof, which is operable to restrict, under specific conditions, the functions of various mobile-objects, such as an information terminal device like a mobile phone, a digital camera, and a vehicle represented by an automobile.

### Background Art

In recent years, the wide-spreading and multi-functionalized aspect of mobile phones has posed various social problems concerning use of mobile phones, such as the social disorder due to deterioration of manners of a part of mobile phone users in using a mobile phone in a public place, or the occurrence of automobile accidents caused by the mobile-phone use while driving. The deterioration of manners of a part of mobile phone users is exemplified by the use of a mobile phone within public vehicles, such as a train and a bus, and the illegal shooting in a bookstore by a camera-equipped mobile phone. In order to prevent these problems from occurring, in the present condition, it cannot but depend on the morals of those who use a mobile phone, and the radical solution in question has not been reached yet. Problems similar to the ones described above may happen not only due to use of a mobile phone but to use of all kinds of portable information terminal devices.

In view of such a situation, a proposal is made to limit the use of all or a part of functions of a mobile phone in the specific area.

For example, in the conventional mobile phone, the function restriction information about a specific area is multiplexed with the electric wave to be transmitted from the base station, and the receiving-side mobile phone receives the information; thereby realizing the function restriction. As another example, a local area radio wave transmitter transmits the function restriction information through radio wave into a specific area, and a mobile phone restricts use of its function while receiving the function restriction information (document 1 (Published Japanese patent application 2002-27554)).

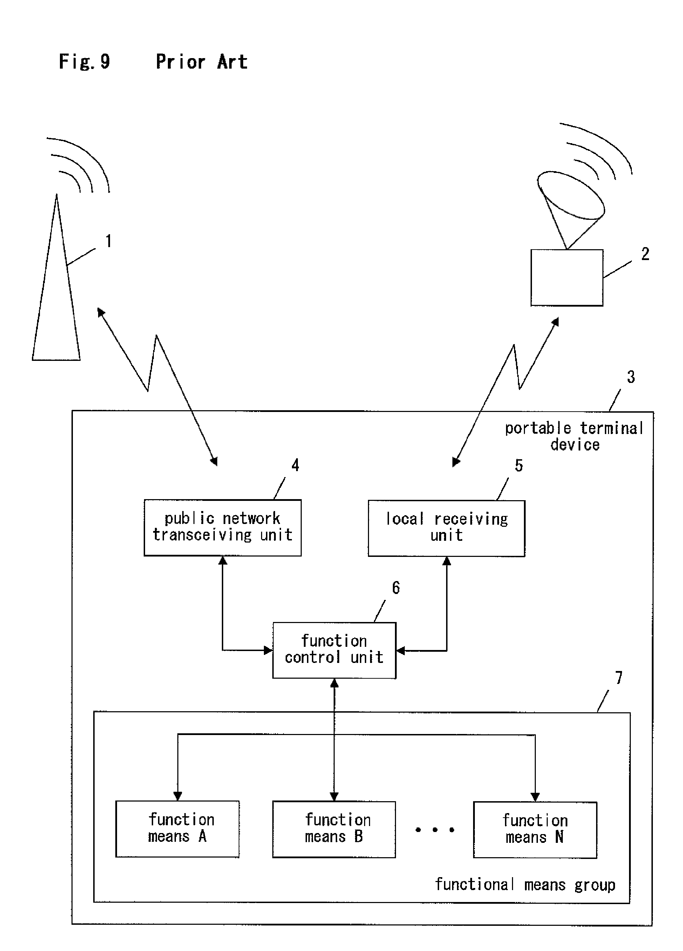

Fig. 9 is a block diagram illustrating a conventional portable terminal device described by the document 1. The conventional portable terminal device is operable to perform function restriction. According to the document 1, the portable terminal device 3 usually communicates between a public network base station 1 and a public network transceiving unit 4. When the portable terminal device 3 is carried into a predetermined area (hereinafter called a local area), a local receiving unit 5 will receive function restriction information for restricting the function of the portable terminal device 3 from a local area transmitter-receiver 2, and a function control unit 6 will restrict the functions of a functional means group 7. A camera, a recording means, a memory for data storing, an input means, an output means, etc. are illustrated by functional means A, B...N of the functional means group 7. For example, when the camera photography is tried in the specific area, the function control unit 6 checks whether the function restriction information (in this case, shooting prohibition information) is received by the local receiving unit 5, and, if received, the functional control unit 6 performs the function restriction of the portable terminal device 3 so that the camera photography may not be made.

However, in the conventional structure shown in the portable terminal device 3, function restriction information was transmitted by an electric wave into the local area, and the function restriction information was detected by receiving the electric wave; thereby performing the function restriction. Therefore, the function restriction was able to be performed only while the electric wave with the function restriction information was received, or only for a fixed period after the electric wave was received. Therefore, the conventional structure possesses a subject that the function restriction becomes impossible, when the portable terminal device 3 is brought into a state where the electric wave is not receivable. Moreover, the conventional structure shown in the portable terminal device 3 possesses another subject that the conventional structure can restrict the function while the function restriction information is received, but can not meet an emergency which requires the release of the function restriction.

As mentioned above, in order to restrict a part of functions of the mobile phone in a specific area, the morals of the mobile phone user are often relied on. For this reason, there are some trials in which benefit compatible to the restriction is given when the user restricts a part of the functions of the mobile phone. A document 2 (Published Japanese patent application 2004-139197) discloses a technology to give benefit as the point when a mobile phone with an electronic ticket function is judged to be not emitting an electric wave while riding a train.

However, even the technology disclosed by the document 2 does not support the function restriction release in emergency.

### Disclosure of the Invention

In view of the above, an object of the present invention is to provide a mobile-object terminal device, a mobile-object function restriction system, and a mobile-object function restriction method, which are able to practice function restriction within a function restricted area surely, and to give benefit for the execution of the function restriction, and furthermore to release the function restriction in emergency.

A first aspect of the present invention provides a mobile-object terminal device comprising: at least one functional means; a receiving unit; an information storage unit; a function restriction unit; and an accumulated benefit information reading unit, wherein the information storage unit comprises: a function restriction information storage unit; a benefit information storage unit; and an emergency information storage unit. The receiving unit receives mobile-object information including: function restriction information for use in restricting a function of the at least one of functional means; benefit information for use in determining benefit to be given in compensation for restriction of the function of the at least one of functional means, the restriction being executed according to the function restriction information; and emergency information to be issued in case of emergency for use in releasing restriction imposed on the function of the at least one of functional means. The function restriction information storage unit stores the function restriction information included in the mobile-object information received by the receiving unit, the benefit information storage unit stores temporally the benefit information included in the mobile-object information received by the receiving unit, and stores accumulatively benefit determined on the basis of the benefit information as accumulated benefit information, and the emergency information storage unit stores the emergency information included in the mobile-object information received by the receiving unit. Based on the function restriction information stored in the function restriction information storage unit and the emergency information stored in the emergency information storage unit, the function restriction unit restricts the execution of the function of the at least one functional means, and at the same time, the function restriction unit determines, in accordance with the restricted function, the benefit to be accumulatively stored in the benefit information storage unit from the benefit information stored temporally in the benefit information storage unit. The accumulated benefit information reading unit, in response to external request, reads out and processes the accumulated benefit information stored in the benefit information storage unit, thereby storing the processed, accumulated benefit information into the benefit information storage unit.

According to the structure, the mobile-object terminal device can practice a required function restriction based on the function restriction information and emergency information included in the mobile-object information which has been received by the receiving unit and stored in the information storage unit. Therefore, it is not necessary to receive the mobile-object information which includes the function restriction information, every time when the function of the functional means is restricted. Moreover, even when the mobile-object terminal device enters in a place of the function restricted area, where the electric wave transmitting the mobile-object information cannot reach easily, the required function restriction can be practiced surely. Furthermore, since the function restriction is performed based on the emergency information, such response as releasing the function restriction in emergency is possible. Moreover, an incentive to the restriction can be given to the user of the mobile-object terminal device, since the benefit is accumulated corresponding to the restricted function.

A second aspect of the present invention provides, in addition to the first aspect, the mobile-object terminal device further comprising: a first power supply of which the electric power supply is able to be switched on and off by a user; and a second power supply of which the electric power supply is unable to be switched on and off by the user. The function restriction unit and the at least one of functional means are fed by the first power supply; and the receiving unit, the information storage unit, and the accumulated benefit information reading unit are fed by the second power supply, and operate independently of the at least one of functional means.

According to the structure, even if the functional means of the mobile-object terminal device is in a dormant state, the receiving unit and the information storage unit is activated independently; therefore, the receiving unit can receive the mobile-object information surely and store it in the information storage unit, when the mobile-object terminal device enters to the function restricted area. Therefore, when the functional means turns from a dormant state to an active state after that, the required function restriction is practiced immediately. Furthermore, when the mobile-object terminal device receives anew the mobile-object information containing emergency information when the functional means is in a dormant state, the mobile-object terminal device can change the contents of the function restriction immediately according to the emergency information.

A third aspect of the present invention provides, in addition to the first aspect, the mobile-object terminal device, wherein, when a function start direction is issued for the at least one of functional means, the function restriction unit restricts the execution of the function by the at least one of functional means to which the function start direction is issued, based on the function restriction information stored in the function restriction information storage unit and the emergency information stored in the emergency information storage unit.

According to the structure, the function restriction of the mobile-object terminal device is performed based on the function restriction information and emergency information which are included in the mobile-object information stored. Therefore, it is not necessary to receive the mobile-object information, every time when the function of the functional means is restricted. Moreover, the exact function restriction in consideration of the emergency information can be practiced.

A fourth aspect of the present invention provides, in addition to the first aspect, the mobile-object terminal device, wherein, when the receiving unit receives the mobile-object information, the function restriction information storage unit stores the function restriction information included in the mobile-object information, the emergency information storage unit stores the emergency information included in the mobile-object information, and the benefit information storage unit stores temporally the benefit information included in the mobile-object information. When a predetermined time elapses after the receiving unit has received the mobile-object information, the function restriction information storage unit deletes or invalidates the function restriction information stored therein, the emergency information storage unit deletes or invalidates the emergency information stored therein, and the benefit information storage unit stores accumulatively benefit determined based on the temporally-stored benefit information as the accumulated benefit information.

According to the structure, the mobile-object terminal device practices the function restriction, based on the function restriction information and the emergency information, for a definite period of time after receiving the mobile-object information. When the definite period of time passes by, the mobile-object terminal device releases the function restriction, and can accumulate the benefit corresponding to the practiced function restriction. Therefore, the mobile-object terminal device does not need to receive new information, in order to release the function restriction.

A fifth aspect of the present invention provides, in addition to the first aspect, the mobile-object terminal device, wherein the mobile-object information further includes function restriction start information and function restriction release information. When the receiving unit receives the mobile-object information including the function restriction start information, the function restriction information storage unit stores the function restriction information included in the mobile-object information, the emergency information storage unit stores the emergency information included in the mobile-object information, and the benefit information storage unit stores temporally the benefit information included in the mobile-object information. When the receiving unit receives the mobile-object information including the function restriction release information, the function restriction information storage unit deletes or invalidates the function restriction information stored therein, the emergency information storage unit deletes or invalidates the emergency information stored therein, and the benefit information storage unit stores accumulatively benefit determined based on the temporally-stored benefit information as accumulated benefit information.

According to the structure, the mobile-object terminal device, for example, receives the mobile-object information including function restriction start information at the entrance of the function restricted area, and receives the mobile-object information including the function restriction release information at the exit of the function restricted area. By this process, the mobile-object terminal device can practice surely the function restriction based on the function restriction information and the emergency information, in the function restricted area. Moreover, the mobile-object terminal device can release the function restriction at the exit of the function restricted area, and at the same time, the mobile-object terminal device can accumulate the benefit in compensation for the function restriction practiced in the function restricted area.

A sixth aspect of the present invention provides, in addition to the first aspect, the mobile-object terminal device, wherein the at least one functional means includes at least one of a communications means, a shooting means, a recording means, and a sounding means.

Assuming that the mobile-object terminal device is a camera-equipped mobile phone, the present structure may forbid, in a function restricted area, the mobile phone to make phone calls, to perform camera photography, to record sound, or to sound a ringer tone.

A seventh aspect of the present invention provides, in addition to the first aspect, the mobile-object terminal device, wherein the at least one functional means includes a speed control means operable to control speed of a vehicle.

Assuming that the mobile-object terminal device is interlocked with the electronic engine control unit and brake of a vehicle, the present structure may control, for example, the vehicle to run at below the specified speed, when the vehicle runs a school zone with a speed limit.

An eighth aspect of the present invention provides a mobile-object function restriction system comprising: a plurality of transmitting devices; a mobile-object terminal device; and a read-out device. In the system, each of the plurality of transmitting devices comprises a transmitting unit operable to transmit mobile-object information to a predetermined area. The mobile-object information includes: function restriction information for use in restricting functions of the mobile-object terminal device; benefit information for use in determining benefit to be awarded in compensation for restriction of the functions of the mobile-object terminal device, the restriction being executed according to the function restriction information; and emergency information to be issued in case of emergency for use in releasing restriction imposed on the functions of the mobile-object terminal device. In the system, the mobile-object terminal device comprises: at least one functional means; a receiving unit; an information storage unit; a function restriction unit; and an accumulated benefit information reading unit, wherein the information storage unit comprises: a function restriction information storage unit; a benefit information storage unit; and an emergency information storage unit. The receiving unit receives the mobile-object information transmitted by each of the plurality of transmitting devices. The function restriction information storage unit stores the function restriction information included in the mobile-object information received by the receiving unit. The benefit information storage unit stores temporally the benefit information included in the mobile-object information received by the receiving unit, and stores accumulatively benefit determined on the basis of the benefit information as accumulated benefit information. The emergency information storage unit stores the emergency information included in the mobile-object information received by the receiving unit. The function restriction unit, based on the function restriction information stored in the function restriction information storage unit and the emergency information stored in the emergency information storage unit, restricts the execution of the function of the at least one functional means, and at the same time determines, in accordance with the restricted function, the benefit to be accumulatively stored in the benefit information storage unit from the benefit information stored temporally in the benefit information storage unit. The accumulated benefit information reading unit, in response to request by the read-out device, reads out and processes the accumulated benefit information stored in the benefit information storage unit, thereby storing the processed, accumulated benefit information into the benefit information storage unit. The read-out device acquires the accumulated benefit information stored in the benefit information storage unit, by requesting the accumulated benefit information reading unit.

According to the structure, it is possible to realize the mobile-object function restriction system which restricts the function of the mobile-object terminal device in a function restricted area, accumulates the benefit in compensation for the restricted function, and also responds to emergency.

A ninth aspect of the present invention provides, in addition to the eighth aspect, the mobile-object function restriction system, wherein the mobile-object information further includes function restriction start information to validate the function restriction information and function restriction release information to invalidate the function restriction information. In the predetermined area with an entrance and an exit, the entrance being provided with one of the plurality of transmitting devices as an entrance transmitting device and the exit being provided with another of the plurality of transmitting devices as an exit transmitting device, the entrance transmitting device transmits the mobile-object information including the function restriction start information, and the exit transmitting device transmits the mobile-object information including the function restriction release information.

According to the structure, the mobile-object terminal device receives the mobile-object information including function restriction start information at the entrance of a function restricted area and practices a function restriction in the function restricted area. Furthermore, the mobile-object terminal device receives the mobile-object information including function restriction release information at the exit of the function restricted area and releases the function restriction when it comes out of the function restricted area. Therefore, based on the function restriction information and the emergency information, the function restriction of the mobile-object terminal device can be surely practiced only within the function restricted area.

A tenth aspect of the present invention provides, in addition to the eighth aspect, the mobile-object function restriction system, wherein the plurality of transmitting devices transmit separately the mobile-object information including both the function restriction information and the benefit information, and the mobile-object information including the emergency information.

According to the structure, it is possible to practice the function restriction release in emergency efficiently, since the mobile-object information including only the emergency information can be transmitted when emergency occurs.

An eleventh aspect of the present invention provides, in addition to the eighth aspect, the mobile-object function restriction system, wherein communications between the mobile-object terminal device and the plurality of transmitting devices are performed by noncontact technique.

According to the structure, communications between the mobile-object terminal device and the transmitting device can be performed using an electric wave, an infrared ray, an ultrasonic wave, and others.

### Brief Description of the Drawings

Fig. 1 is a block diagram illustrating a mobile-object function restriction system and a mobile-object terminal device in Embodiment 1 of the present invention;
Fig. 2 is a block diagram illustrating a mobile-object function restriction system and a mobile-object terminal device in Embodiment 2 of the present invention;
Fig. 3 is a block diagram illustrating a mobile-object function restriction system and a mobile-object terminal device in Embodiment 3 of the present invention;
Fig. 4 is a block diagram illustrating a mobile-object function restriction system and a mobile-object terminal device in Embodiment 4 of the present invention;
Fig. 5 is a block diagram illustrating a mobile-object function restriction system and a mobile-object terminal device in Embodiment 5 of the present invention;
Fig. 6 is the anterior half of a flow chart of the mobile-object function restriction system in Embodiment 1 of the present invention;
Fig. 7 is the posterior half of a flow chart of the mobile-object function restriction system in Embodiment 1 of the present invention;
Fig. 8 is a flow chart of the function restriction of the mobile-object terminal device in Embodiment 1 of the present invention; and
Fig. 9 is a block diagram illustrating the conventional portable terminal device which enables the function restriction.

### Best Mode for Carrying out the Invention

### Embodiment 1

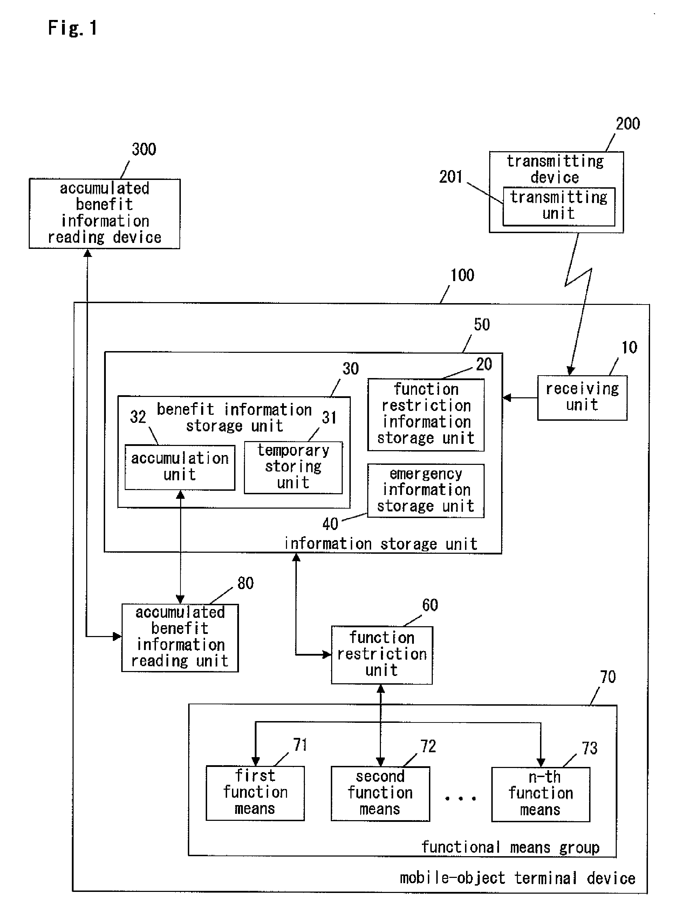

Fig. 1 is a block diagram illustrating a mobile-object function restriction system and a mobile-object terminal device in Embodiment 1 of the present invention.

The mobile-object function restriction system of the present embodiment comprises a mobile-object terminal device 100, a transmitting device 200, and an accumulated benefit information reading device 300. The mobile-object function restriction system of the present embodiment transmits the mobile-object information from the transmitting device 200 to the mobile-object terminal device 100, with a noncontact technique. In a specified area (hereinafter, it is called a function restricted area), the mobile-object information includes three kinds of information; function restriction information for restricting a function of the mobile-object terminal device 100, benefit information for receiving a benefit in compensation for restricting the function by the mobile-object terminal device 100, and emergency information to be transmitted in emergency for releasing a part of the function restriction to be practiced based on the function restriction information. Usually, the mobile-object information including the function restriction information and the benefit information is transmitted. In emergency, the mobile-object information including the function restriction information, the benefit information, and the emergency information is transmitted. Alternatively, after the mobile-object information including the function restriction information and the benefit information has been transmitted, the mobile-object information including only the emergency information may be transmitted when emergency occurs.

The noncontact technique to transmit the mobile-object information may employ usual electric waves, or RFID (Radio Frequency Identification System) which is a radio frequency access system used for reading information from an IC card or a bar code. Furthermore, the noncontact technique may employ an IrDA technology (radio frequency communication technology using the infrared radiation which Infra-red Data Association recommends). When the RFID and the IrDA technology are employed, the range of access of the electric wave transmitted from the transmitting device 200 can be restricted to a narrow range. Such system and technology may be employed in construction of a mobile-object function restriction system, in which a transmitter is installed at a gate-shaped entrance; thereby the mobile-object terminal device 100 passing through the entrance can receive the mobile-object information including function restriction information and benefit information.

In the mobile-object function restriction system of the present embodiment, the transmitting device 200 possesses the transmitting unit 201 which transmits the above-mentioned mobile-object information to the limited area by use of the noncontact technique. For example, the mobile-object terminal device 100 is a mobile phone. An accumulated benefit information reading device 300 is a device operable to read out the amount of the benefit which the mobile-object terminal device 100 has accumulated in compensation for the practiced function restriction.

The following explains the mobile-object terminal device 100 of the present embodiment in detail.

As shown in Fig. 1, the mobile-object terminal device 100 of the present embodiment comprises a receiving unit 10, an information storage unit 50, a function restriction unit 60, a functional means group 70, and an accumulated benefit information reading unit 80. The information storage unit 50 possesses a function restriction information storage unit 20, a benefit information storage unit 30, and an emergency information storage unit 40. The benefit information storage unit 30 possesses a temporary storing unit 31 and an accumulation unit 32. The functional means group 70 possesses a first function means 71, a second function means 72...and an n-th function means 73.

After the receiving unit 10 receives the mobile-object information transmitted from the transmitting unit 201 of the transmitting device 200, the receiving unit 10 sends the received mobile-object information to the information storage unit 50. The information storage unit 50 analyzes the mobile-object information sent, stores the function restriction information included in the mobile-object information into the function restriction information storage unit 20, and stores the benefit information included in the mobile-object information into the temporary storing unit 31 of the benefit information storage unit 30. Moreover, when emergency information is included in the mobile-object information, the information storage unit 50 stores the emergency information into the emergency information storage unit 40.

Assume that, for example, the first function means 71 in the functional means group 70 issue a function start direction to start the function. When the function restriction unit 60 receives the function start direction, the function restriction unit 60 accesses the function restriction information storage unit 20, and reads the stored function restriction information. Then, the function restriction unit 60 checks whether there is function restriction information corresponding to the first function means 71 which has issued the function start direction. When there is the corresponding function restriction information, then the function restriction unit 60 accesses the emergency information storage unit 40 of the information storage unit 50, and checks whether the function restriction release of the first function means 71 is possible according to the stored emergency information. When the function restriction release is not possible according to the emergency information, the function restriction unit 60 restricts the function start for the first function means 71. When there is no corresponding function restriction information to the first function means 71 or when the function restriction release of the first function means 71 is permitted according to the emergency information, the function restriction unit 60 permits the function start for the first function means 71.

The function restriction information includes the information regarding the function restriction, and the information indicating whether or not the restriction for every function to be restricted will be released in emergency. For example, when the first function means 71 is a shooting means, function restriction information is such information as indicating "Shooting is forbidden" or "Flushing is forbidden (but shooting is permitted)", and such information as indicating that the function restriction release is forbidden even in emergency. When the first function means 71 is communication means, function restriction information is such information as indicating "Communication is forbidden" or "Communication is forbidden (but E-mail is permitted)," and such information as indicating that the function restriction release is possible (in other words, the communication is permitted) in emergency.

The emergency information is information for releasing the function restriction imposed by the function restriction information, regarding the function of which the function restriction should not be performed in emergency, within the functions of each functional means among the functional means group 70. Thereby, while performing the function restriction that is required in the function restricted area according to the function restriction information, it is possible to permit the function restriction release in emergency according to the emergency information.

When the receiving unit 10 receives the mobile-object information, and stores the function restriction information included in the mobile-object information into the function restriction information storage unit 20, the information storage unit 50 holds the function restriction information during a predetermined time. When the predetermined time goes by after the function restriction information is stored, the information storage unit 50 deletes or invalidates the function restriction information stored in the function restriction information storage unit 20. Thereby, the mobile-object terminal device 100 can perform the function restriction that is required in the function restricted area, during the predetermined time after receiving the function restriction information. When the information storage unit 50 deletes or invalidates the function restriction information stored in the function restriction information storage unit 20, the information storage unit 50 also deletes or invalidates the emergency information stored in the emergency information storage unit 40.

The mobile-object information of the present embodiment can include the function restriction start information and the function restriction release information. The following explains the operation of the mobile-object terminal device 100 for a case where the transmitting device 200 operable to transmit the mobile-object information is installed at the entrance and exit of the function restricted area, as an example.

When the receiving unit 10 of the mobile-object terminal device 100 receives the mobile-object information including the function restriction start information from the transmitting device 200 installed at the entrance of the function restricted area, the receiving unit 10 sends the received mobile-object information to the information storage unit 50. The information storage unit 50 analyzes the mobile-object information sent, and recognizes that the function restriction start information is included in the mobile-object information. The information storage unit 50 stores the function restriction information in the function restriction information storage unit 20, and directs the function restriction information storage unit 20 to hold the function restriction information until the receiving unit 10 receives new mobile-object information including the function restriction release information. Even when the predetermined time has passed after storing the function restriction information, the function restriction information storage unit 20 keeps holding the function restriction information.

Assume that the second function means 72 of the functional means group 70, for example, issues a function start direction for starting a function. Upon receiving the function start direction, the function restriction unit 60 checks if there is function restriction information pertinent to the second function means 72 which has issued the function start direction, by accessing the function restriction information storage unit 20 of the information storage unit 50 and by referring to the stored function restriction information. When there is pertinent function restriction information, the function restriction unit 60 accesses the emergency information storage unit 40 of the information storage unit 50, and checks whether the function restriction release of the second function means 72 is permitted according to the stored emergency information. When the function restriction release is forbidden according to the emergency information, the function restriction unit 60 restricts the function start for the second function means 72. When there is no pertinent function restriction information or when the function restriction release of the second function means 72 is permitted, the function restriction unit 60 permits the function start for the second function means 72 according to the emergency information.

Next, when the receiving unit 10 of the mobile-object terminal device 100 receives the mobile-object information including the function restriction release information from the transmitting device 200 that is installed at the exit of the function restricted area, the receiving unit 10 sends the received mobile-object information to the information storage unit 50. The information storage unit 50 analyzes the transmitted mobile-object information, recognizes that the mobile-object information includes the function restriction release information, and then deletes or invalidates the function restriction information stored in the function restriction information storage unit 20. Thereby, the mobile-object terminal device 100 does not receive the function restriction afterwards. When the information storage unit 50 deletes or invalidates the function restriction information stored in the function restriction information storage unit 20, the information storage unit 50 deletes or invalidates the emergency information stored in the emergency information storage unit 40.

In the above-mentioned example, the transmitting device 200 installed at the entrance of the function restricted area transmits the mobile-object information including the function restriction start information; and the transmitting device 200 installed at the exit of the function restricted area transmits the mobile-object information including the function restriction release information. Thereby, while the mobile-object terminal device 100 is in the function restricted area, the function restriction required in the function restricted area can be surely performed.

For example, if the function restricted area is in a building of a hospital, the mobile-object terminal device 100 receives the mobile-object information including the function restriction start information at the entrance of the building of the hospital, and then receives the mobile-object information including the function restriction release information at the exit. As a result, in the building of the hospital, it is possible to realize a function restriction that forbids the communication of the mobile-object terminal device 100 (for example, a mobile phone). Thus, it is possible to prevent electromagnetic disturbance due to the mobile-object terminal device 100 (for example, a mobile phone) in the hospital.

As another example, mobile-object information including function restriction start information is transmitted in synchronization with engine starting of a car, and the mobile-object information including the function restriction release information is transmitted in synchronization with engine stopping. Thus, the mobile phone which is the mobile-object terminal device 100 having received the mobile-object information can not be used while driving a car. As a result, it is possible to prevent a car accident due to using a mobile phone while driving a car.

The function restriction of the mobile-object terminal device 100 of the present invention that is explained above may cause inconvenience to a user, therefore, the mobile-object function restriction system of the present embodiment is so designed that the user can receive a certain benefit as compensation for the function restriction. The following explains how to receive the benefit.

In the mobile-object function restriction system of the present embodiment shown in Fig. 1, the mobile-object information which is transmitted from the transmitting device 200 includes the benefit information as well as the function restriction information. When the receiving unit 10 of the mobile-object terminal device 100 receives the mobile-object information including the benefit information from the transmitting device 200, the receiving unit 10 sends the received mobile-object information to the information storage unit 50. The information storage unit 50 takes out the benefit information from the transmitted mobile-object information, and stores the benefit information into the temporary storing unit 31 in the benefit information storage unit 30. When the predetermined time passes by after the function of the functional means group 70 has been restricted by the function restriction unit 60, or when the receiving unit 10 receives the mobile-object information including the function restriction release information and the information storage unit 50 deletes or invalidates the function restriction information stored in the function restriction information storage unit 20, the information storage unit 50 determines benefits in compensation for the restricted function of the functional means group 70, based on the benefit information stored in the temporary storing unit 31, and accumulates the benefits in the accumulation unit 32 as the accumulated benefit information.

The accumulated benefit information which is accumulated in the accumulation unit 32 can be used as points for discounts or the exchange with goods etc. As a result, the user of the mobile-object terminal device 100 can acquire the benefit in compensation for the function restriction of the mobile-object terminal device 100 that is practiced within the function restricted area.

When the user receives a benefit, such as discounts or the exchange with goods, by using the accumulated benefit information that is accumulated in the accumulation unit 32, the user requests the amount used for receiving the benefit, to the accumulated benefit information reading unit 80 via the accumulated benefit information reading device 300. The accumulated benefit information reading unit 80 which has received the request reads the amount of the benefit from the accumulated benefit information accumulated in the accumulation unit 32, deducts the used amount, and writes the remaining amount in the accumulation unit 32 as new accumulated benefit information.

When writing in the accumulation unit 32 is completed, the accumulated benefit information reading unit 80 notifies the accumulated benefit information reading device 300 that the accumulated benefit information of the accumulation unit 32 has been updated. Thereby, since the updating of the accumulated benefit information can be processed by the mobile-object terminal device 100, it is possible to simplify the accumulated benefit information reading device 300. In addition, the accumulated benefit information which is accumulated in the mobile-object terminal device 100 can not be read out to the exterior; therefore, the information is protected.

According to the mobile-object function restriction system of the present embodiment, in the mobile-object terminal device 100, the function restriction, restriction release, accumulation of benefits to the function restriction, and most of the management processing in these kinds of processing are able to be performed by the mobile-object terminal device 100 itself. Therefore, when structuring the mobile-object function restriction system, it is possible to simply structure necessary external devices other than the mobile-object terminal device 100, such as the transmitting device 200 and the accumulated benefit information reading device 300.

The following explains the flow of operation of the mobile-object function restriction system in storing and deleting the function restriction information of the present embodiment, according to a flow chart with concurrent reference to Fig. 1.

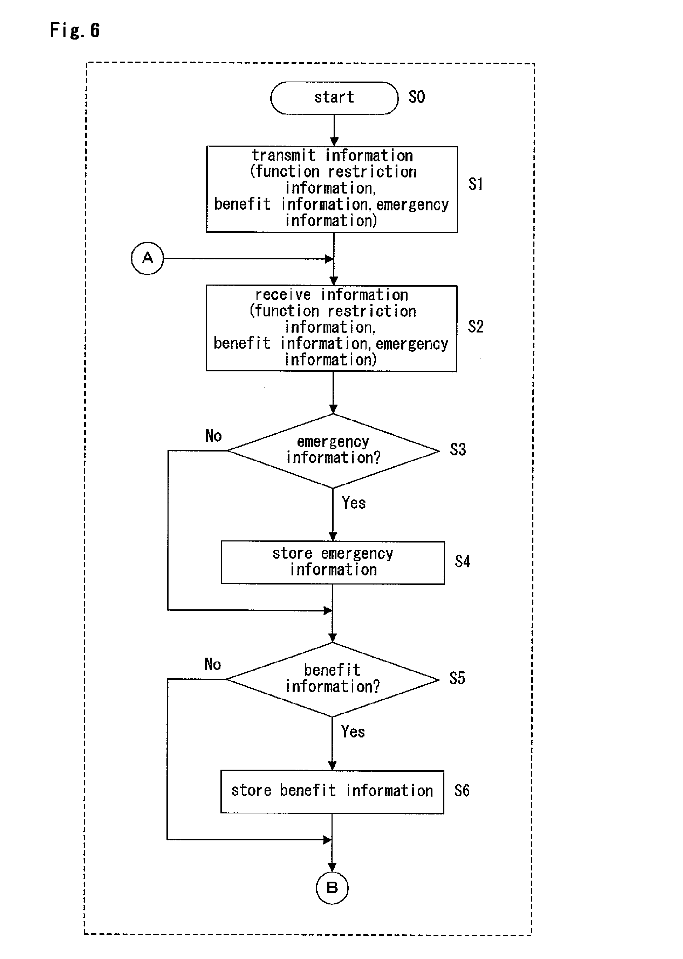

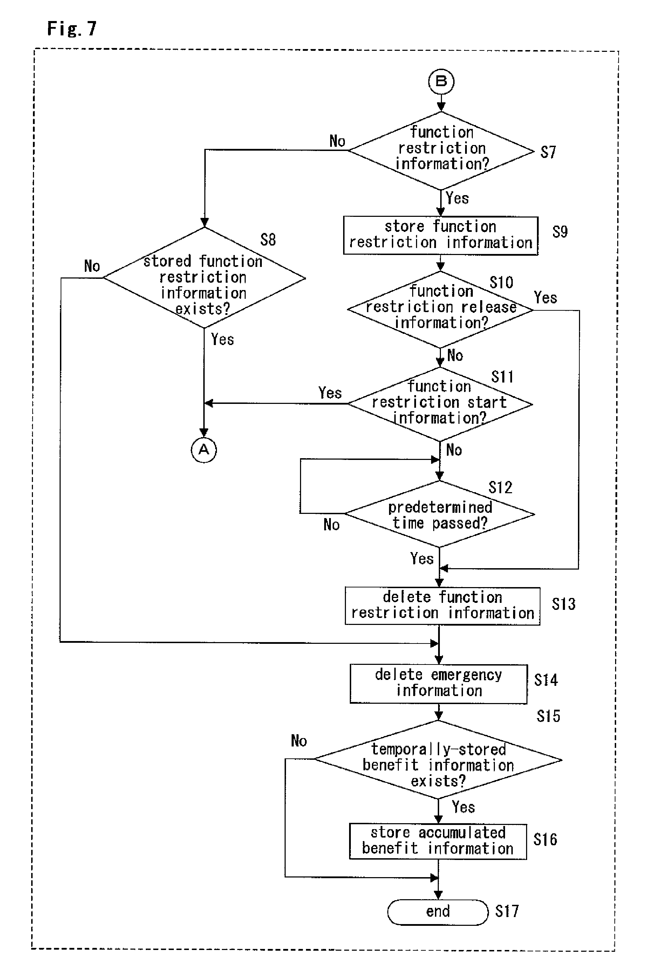

Fig. 6 is the anterior half of a flow chart of the mobile-object function restriction system in Embodiment 1 of the present invention. Fig. 7 is the posterior half of a flow chart of the mobile-object function restriction system in Embodiment 1 of the present invention. The sign "A" and the sign "B" of Fig. 6 are connected to the sign "A" and the "B" of Fig. 7, respectively.

At Step S0 of Fig. 6, processing starts. At Step S1, the transmitting device 200 transmits mobile-object information including function restriction information, benefit information, and emergency information. The emergency information is not included in the mobile-object information in a state of nonemergency. When a state of emergency occurs during the processing, the mobile-object information including only the emergency information may be transmitted from the transmitting device 200.

At Step S2, the receiving unit 10 receives the mobile-object information, and sends the received mobile-object information to the information storage unit 50.

At Step S3, the information storage unit 50 judges whether the emergency information is included in the transmitted mobile-object information. When the judgment result indicates that the emergency information is included (the result is "Yes"), the control moves to Step S4. When the judgment result indicates that the emergency information is not included (the result is "No"), the control moves to Step S5.

At Step S4, the information storage unit 50 stores the emergency information in the emergency information storage unit 40, and the control moves to Step S5.

At Step S5, the information storage unit 50 judges whether the sent mobile-object information includes the benefit information. When the judgment result indicates that the benefit information is included (the result is "Yes"), the control moves to Step S6. When the judgment result indicates that the benefit information is not included (the result is "No"), the control moves to Step S7 of Fig. 7.

At Step S6, the information storage unit 50 stores the benefit information in the temporary storing unit 31, and then the control moves to Step S7.

At Step S7 of Fig. 7, the information storage unit 50 judges whether the function restriction information is included in the sent mobile-object information. When the judgment result indicates that the function restriction information is included (the result is "Yes"), the control moves to Step S9. When the judgment result indicates that the function restriction information is not included (the result is "No"), the control moves to Step S8.

At Step S8, the information storage unit 50 judges whether there is any function restriction information which is stored in the function restriction information storage unit 20. When the judgment result indicates that there is the function restriction information stored (the result is "Yes"), the control returns to Step S2 of Fig. 6, and the receiving unit 10 waits to receive new mobile-object information. When the judgment result indicates that there is no stored function restriction information (the result is "No"), the control moves to Step S14.

At Step S9, the information storage unit 50 stores the function restriction information in the function restriction information storage unit 20, and the control moves to Step S10.

At Step S10, the information storage unit 50 judges whether the function restriction release information is included in the sent mobile-object information. When the judgment result indicates that the function restriction release information is included (the result is "Yes"), the control moves to Step S 13. When the judgment result indicates that the function restriction release information is not included (the result is "No"), the control moves to Step S 11.

At Step S11, the information storage unit 50 judges whether the function restriction start information is included in the sent mobile-object information. When the judgment result indicates that the function restriction start information is included (the result is "Yes"), the control moves to Step S2 of Fig. 6, and the receiving unit 10 waits to receive new mobile-object information. When the judgment result indicates that the function restriction start information is not included (the result is "No"), the control moves to Step S12.

At Step S12, the information storage unit 50 waits for the predetermined time to pass by. When the predetermined time passes by, the control moves to Step S 13.

At Step S13, the information storage unit 50 deletes the function restriction information that is stored in the function restriction information storage unit 20, and then the control moves to Step S 14.

At Step S14, when the emergency information is stored in the emergency information storage unit 40, the information storage unit 50 deletes the stored emergency information stored. Then, the control moves to Step S15.

The deletion of the function restriction information at Step S 13 and the deletion of the emergency information at Step S 14 are performed, when the predetermined time has passed by after the receiving unit 10 receives the mobile-object information, or when the receiving unit 10 has received the mobile-object information including the function restriction release information.

At Step S15, the information storage unit 50 judges whether there is any benefit information which is stored in the temporary storing unit 31. When the judgment result indicates that there is the stored benefit information (the result is "Yes"), the control moves to Step S16. When the judgment result indicates that there is no stored benefit information (the result is "No"), the control moves to Step S17 to end the processing.

At Step S16, the information storage unit 50 determines a benefit in compensation for the practiced function restriction from the benefit information stored in the temporary storing unit 31, and accumulates the benefit in the accumulation unit 32 as the accumulated benefit information. Thereafter, the control moves to Step S17 to end the processing.

According to the above-mentioned flow, each of the following processing is performed: the storing and deleting of the function restriction information to the function restriction information storage unit 20; the storing and deleting of the emergency information to the emergency information storage unit 40; the storing of the benefit information to the temporary storing unit 31; and the storing of the benefit corresponding to the function restriction to the accumulation unit 32.

The following explains the flow of processing which restricts the function of the functional means group 70 of the mobile-object terminal device 100, according to a flow chart with concurrent reference to Fig. 1.

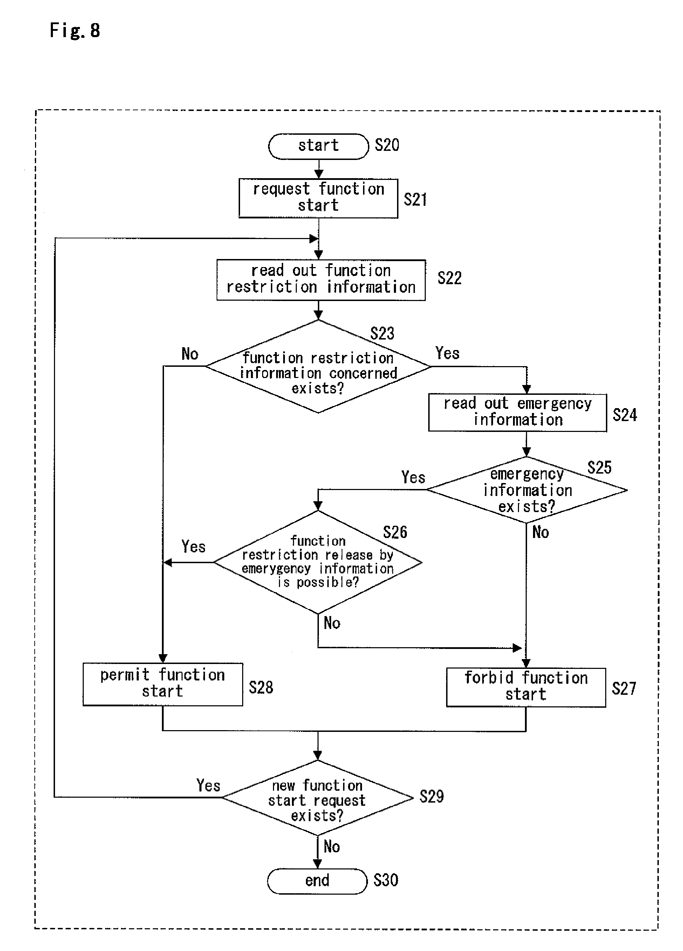

Fig. 8 is a flow chart illustrating the function restriction of a mobile-object terminal device in Embodiment 1 of the present invention.

The processing starts at Step S20.

At Step S21, one of the functional means of the functional means group 70 makes a request of the function start to the function restriction unit 60. In the following explanation, assume that the functional means which requests the function start is the first function means 71.

At Step S22, the function restriction unit 60 reads the function restriction information which is currently stored in the function restriction information storage unit 20.

At Step S23, the function restriction unit 60 judges whether the function restriction information corresponding to the first function means 71, which has requested the function start, is included in the function restriction information read from the function restriction information storage unit 20.

When the judgment result at Step S23 indicates that the corresponding function restriction information is not included (the result is "No"), the control moves to Step S28. At Step 28, the function restriction unit 60 permits the requested function start to the first function means 71. Thereafter, the control moves to Step S29.

When the judgment result at Step 23 indicates that the corresponding function restriction information is included (the result is "Yes"), the control moves to Step S24.

At Step S24, the function restriction unit 60 reads the emergency information which is currently stored in the emergency information storage unit 40.

At Step S25, the function restriction unit 60 judges whether there is any emergency information. When the judgment result indicates that there is no emergency information (the result is "No"), the control moves to Step S27. At Step S27, the function restriction unit 60 forbids the requested function start for the first function means 71. Thereafter, the control moves to Step S29.

At Step S25, when the judgment result indicates that there is the emergency information (the result is "Yes"), the control moves to Step S26.

At Step S26, the function restriction information storage unit 20 judges whether the function restriction, which is performed according to the function restriction information pertinent to the first function means 71 among the function restriction information stored in the function restriction information storage unit 20, can be released by the emergency information. When the judgment result indicates that the function restriction release by the emergency information can not be performed (the result is "No"), the control moves to Step S27. At Step S27, the function restriction unit 60 forbids the requested function start. Thereafter, the control moves to Step S29.

At Step S26, when the judgment result indicates that the function restriction release by the emergency information can be performed (the result is "Yes"), the control moves to Step S28. At Step S28, the function restriction unit 60 permits the requested function start for the first function means 71. Thereafter, the control moves to Step S29.

At Step S29, the function restriction unit 60 judges whether there is a new function start request. When there is the new function start request (the judgment result is "Yes"), the control returns to Step S22, and the processing from Step S22 to Step S29 is repeated. When there is no new function start request (the judgment result is "No"), the control moves to Step S30 to end the processing.

According to the above-mentioned flow, the processing of the function restriction unit 60 to restrict the function of the functional means group 70 of the mobile-object terminal device 100 is performed.

The contents-recorded program that follows the flow chart shown in Fig. 6 to Fig. 8 is recorded on a recording medium, and is executed by a CPU. As the record medium, a FD (Flexible Disk), an HD (Hard Disk), a CD (Compact Disk), a DVD (Digital Versatile Disk), etc. can be used.

### Embodiment 2

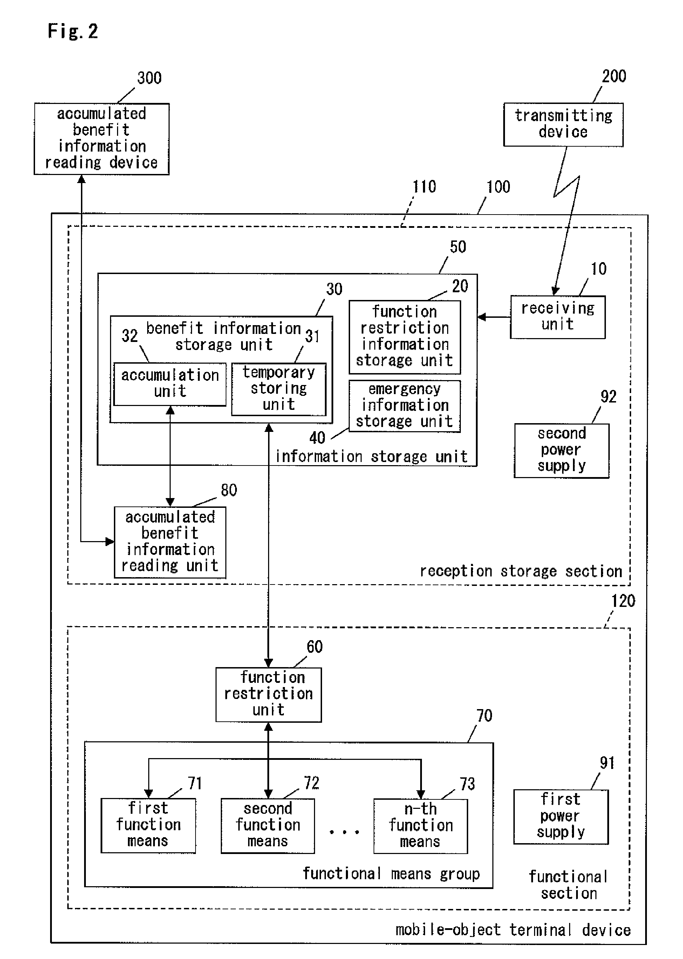

Fig. 2 is a block diagram illustrating a mobile-object function restriction system and a mobile-object terminal device 100 in Embodiment 2 of the present invention. In Fig. 2, the same symbols are given to elements each having the same function as elements of Fig. 1 in order to omit explanation.

The mobile-object terminal device 100 of the present embodiment shown in Fig. 2 further comprises a first power supply 91 of which a user can switch the power supply on and off, and a second power supply 92 of which a user can not switch the power supply on and off.

The receiving unit 10, the information storage unit 50, and the accumulated benefit information reading unit 80 belong to a reception storage section 110, to which the electric power is supplied from the second power supply 92.

The function restriction unit 60 and the functional means group 70 belong to a functional section 120, to which the electric power is supplied from the first power supply 91.

By use of such structure, the reception storage section 110 including the receiving unit 10, information storage unit 50, and the accumulated benefit information reading unit 80, and the functional section 120 including the function restriction unit 60 and the functional means group 70 are rendered operative independently.

According to the mobile-object terminal device 100 of the present embodiment, for example, even when the functional means group 70 is in a dormant state, each component belonging to the reception storage section 110 is always held in an active state. Therefore, even when the functional means group 70 is in the dormant state, the receiving unit 10 of the mobile-object terminal device 100 can surely receive mobile-object information, and can send the information to the information storage unit 50. Then, the information storage unit 50 can surely store the function restriction information, the emergency information and the benefit information included in the sent mobile-object information. When the functional means group 70 is changed from the dormant state to the active state, the function restriction which is requested in the function restricted area is immediately performed.

Since the other operation of the mobile-object function restriction system of the present embodiment is the same as that of the mobile-object function restriction system of Embodiment 1 of the present invention, the explanation is omitted.

### Embodiment 3

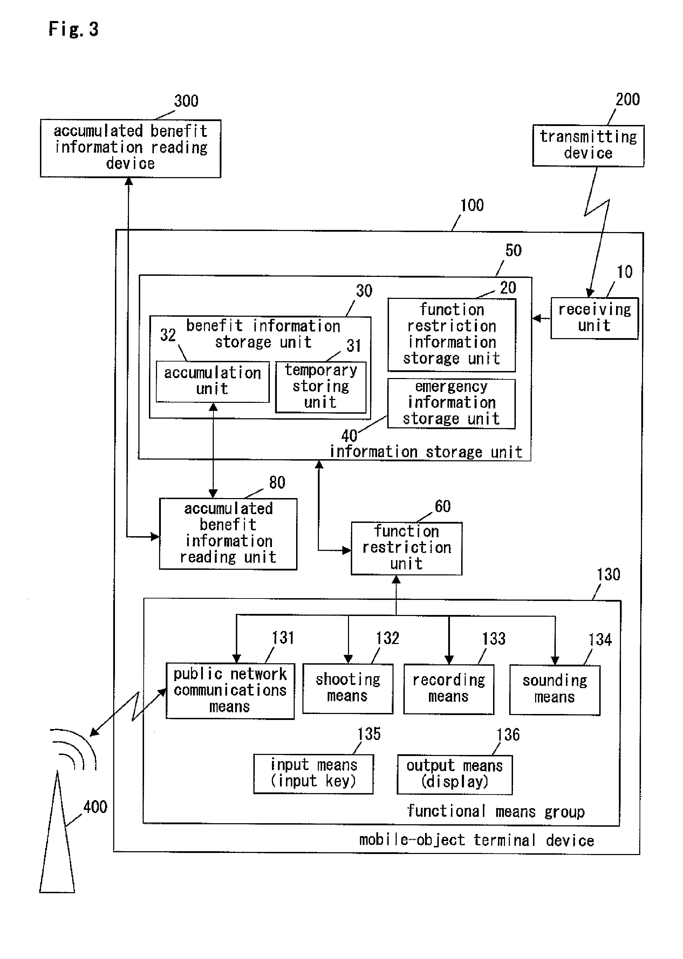

Fig. 3 is a block diagram illustrating a mobile-object function restriction system and a mobile-object terminal device in Embodiment 3 of the present invention. In Fig. 3, the same symbols are given to elements each having the same function as elements of Fig. 1 in order to omit explanation.

The mobile-object terminal device 100 of the present embodiment possesses the same function as a camera-equipped mobile phone. In other words, the mobile-object terminal device 100 of the present embodiment comprises the receiving unit 10, the information storage unit 50, the accumulated benefit information reading unit 80, the function restriction unit 60, and a functional means group 130.

The functional means group 130 includes a public network communications means 131 operable to perform mobile phone communications with a public network base station 400; a shooting means 132 equipped with a CCD camera; a recording means 133 with a memory; a sounding means 134 operable to make a ringer tone and an input key confirmation sound; an input means 13 5 such as an input key; and an output means 136 such as an LCD display. Among these elements of functional means, the public network communications means 131, the shooting means 132, the recording means 133, and the sounding means 134 are connected to the function restriction unit 60 and are controlled in order to restrict their functions.

The following explains an example of operation of the mobile-object function restriction system of the present embodiment.

The example is explained for a case in which function restriction information forbids the sounding of a ringer tone and the calling of a mobile phone at a theater. When the mobile phone concerned is called from the outside and the sounding means 134 tries to sound a ringer tone, the function restriction unit 60 receives a sounding start direction, and checks the function restriction information stored in the function restriction information storage unit 20 of the information storage unit 50. After the function restriction unit 60 finds that sounding a ringer tone is forbidden, the function restriction unit 60 instructs the sounding means 134 not to sound a ringer tone. Thus, the ringer tone is not sounded. However, it is possible to receive e-mails. When a calling from the mobile phone is tried, the function restriction unit 60 receives a calling start direction from the public network communications means 131, and checks the function restriction information stored in the function restriction information storage unit 20. After the function restriction unit 60 finds that calling is forbidden, the function restriction unit 60 instructs the public network communications means 131 not to call. Thus, the calling cannot be made.

However, when the emergency information is stored in the emergency information storage unit 40, the function restriction unit 60 checks whether the function restriction concerned can be released according to the emergency information. When the function restriction can be released, the function restriction unit 60 permits the function to start which has received the start direction.

When the function restriction unit 60 releases the function restriction of the functional means group 130, after the predetermined time has passed by since the function restriction unit 60 restricted the function of the functional means group 130 based on the function restriction information, or after the receiving unit 10 has received the mobile-object information including the function restriction release information, the information storage unit 50 determines the benefit corresponding to the function restriction practiced by the functional means group 130, and accumulates the determined benefit to the accumulation unit 32 as the accumulated benefit information.

Another example of operation is explained for a case where function restriction information permits shooting by a camera, but does not permit flashing, at an event hall. When a user tries to shoot by a camera-equipped mobile phone, the function restriction unit 60 receives a shooting start direction from the shooting means 132, and checks the function restriction information stored in the function restriction information storage unit 20, and the emergency information stored in the emergency information storage unit 40. After the function restriction unit 60 finds that the flashing is forbidden, the function restriction unit 60 instructs the shooting means 132 not to use the flashing. As a result, the shooting means 132 shoots without flashing.

Although the above-mentioned examples of the function restriction information are simple, the function restriction information may include other pieces of function restriction information, separately or in combination. For example, employing the mobile-object terminal device 100 of Embodiment 2 of the present invention which is mentioned above, the function restriction information may include information of turning off the power supply of the functional means group 130. In this case, when the mobile phone of the present embodiment is in the function restricted area, the mobile phone cannot be used. However, once the mobile phone is outside the function restricted area, the mobile phone can be normally used.

### Embodiment 4

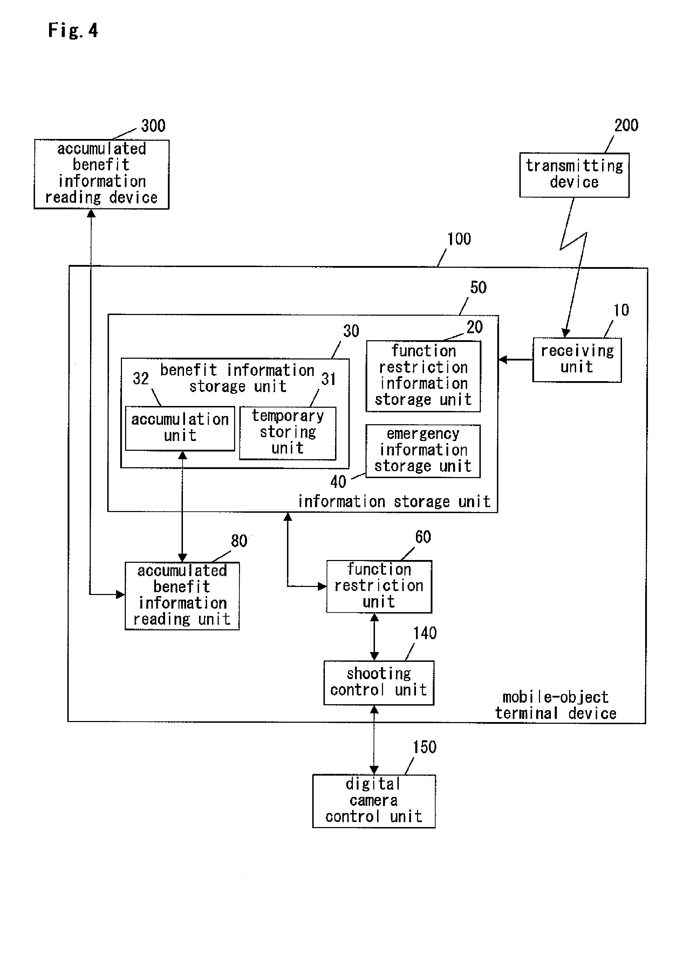

Fig. 4 is a block diagram illustrating a mobile-object function restriction system and a mobile-object terminal device in Embodiment 4 of the present invention. In Fig. 4, the same symbols are given to elements each having the same function as elements of Fig. 1 in order to omit explanation.

The mobile-object function restriction system of the present embodiment controls the function of a digital camera. In other words, the mobile-object terminal device 100 of the present embodiment comprises the receiving unit 10, the information storage unit 50, the accumulated benefit information reading unit 80, the function restriction unit 60, and a shooting control unit 140. The shooting control unit 140 is connected to a digital camera control unit 150 of a main unit of the digital camera.

Function restriction information of the present embodiment includes shooting prohibition information, flushing prohibition information, confirmation sound prohibition information, silent shutter information, and so on.

In the function restricted area, the mobile-object information, which includes the function restriction information necessary in the function restricted area and the corresponding benefit information, is transmitted by a transmitting device 200, received by the receiving unit 10, and then sent to the information storage unit 50. The information storage unit 50 stores the function restriction information included in the sent mobile-object information in the function restriction information storage unit 20. Simultaneously, the information storage unit 50 stores the benefit information included in the sent mobile-object information in the benefit information storage unit 30. Moreover, when the mobile-object information including emergency information is transmitted from the transmitting device 200, the mobile-object information is received by the receiving unit 10, and then is sent to the information storage unit 50. The information storage unit 50 stores the emergency information included in the sent mobile-object information in the emergency information storage unit 40.

When the start direction of a certain function is issued from the digital camera control unit 150, the function restriction unit 60 receives the start direction, and checks the function restriction information stored in the function restriction information storage unit 20 and the emergency information stored in the emergency information storage unit 40. When the function concerned is restricted, the function restriction unit 60 notifies the digital camera control unit 150 of the function restriction concerned via the shooting control unit 140.

When the function restriction is released after the function restriction unit 60 has restricted the function, the information storage unit 50 determines the benefit corresponding to the practiced function restriction based on the benefit information stored in the temporary storing unit 31, and accumulates the determined benefit in the accumulation unit 32 as the accumulated benefit information.

Thus, the digital camera which possesses the mobile-object terminal device 100 of the present embodiment can surely perform the necessary function restriction in the function restricted area, as well as the response to emergency.

### Embodiment 5

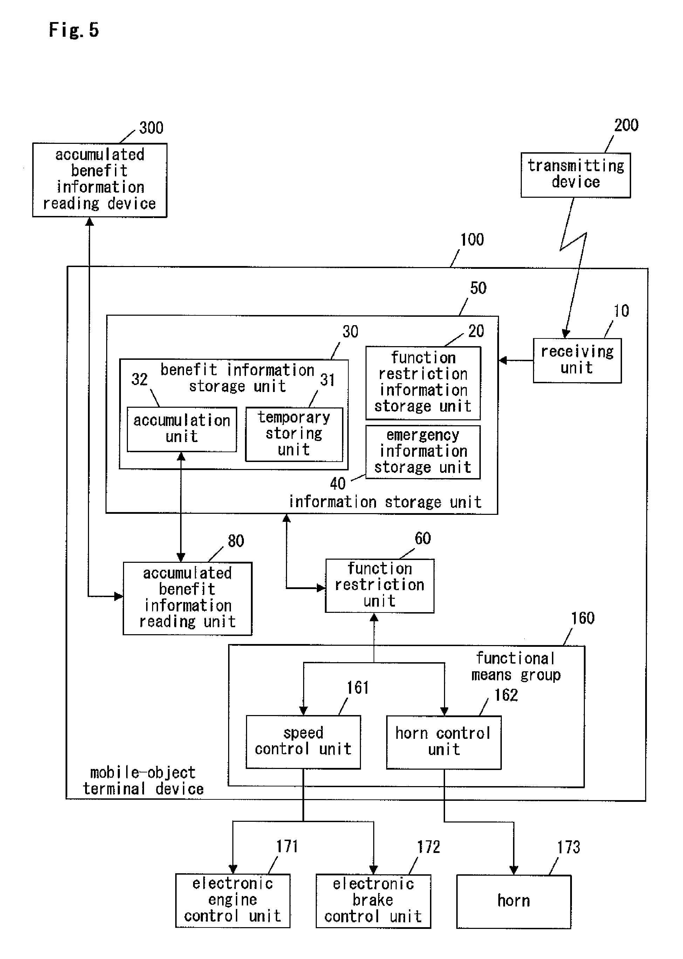

Fig. 5 is a block diagram illustrating a mobile-object function restriction system and a mobile-object terminal device in Embodiment 5 of the present invention. In Fig. 5, the same symbols are given to elements each having the same function as elements of Fig. 1 in order to omit explanation.

The mobile-object function restriction system of the present embodiment can control running speed of a vehicle (for example, a car). In other words, the mobile-object terminal device 100 of the present embodiment is installed in a car. The mobile-object terminal device 100 comprises the receiving unit 10, the information storage unit 50, the accumulated benefit information reading unit 80, the function restriction unit 60, and a functional means group 160. The functional means group 160 possesses a speed control unit 161 and a horn control unit 162. Furthermore, the speed control unit 161 is connected to an electronic engine control unit 171 and an electronic brake control unit 172 of the car. The horn control unit 162 is connected to a horn 173 of the car.

For example, assume that a premise of a housing complex is specified as a function restricted area. Now, a transmitting device 200 operable to transmit mobile-object information including function restriction start information is installed at the housing complex entrance, and another transmitting device 200 operable to transmit mobile-object information including function restriction release information is installed at the housing complex exit.

The function restriction information of the mobile-object function restriction system of the present embodiment includes speed limit information and horn prohibition information.

When a car, in which the mobile-object terminal device 100 of the present embodiment is installed, enters the premise of the housing complex, the speed limit information and the horn prohibition information become effective. In other words, when the car passes the housing complex entrance, the receiving unit 10 receives the mobile-object information including function restriction start information, function restriction information, and benefit information. The information storage unit 50 stores the function restriction information (the speed limit information and the horn prohibition information are included) in the function restriction information storage unit 20. The function restriction information is effective, until the car passes the housing complex exit and receives new mobile-object information including function restriction release information.

In the premise of the housing complex, when the driver tries to increase the speed of the car, the function restriction unit 60 refers to the speed limit information stored in the function restriction information storage unit 20, and controls the electronic engine control unit 171 and the electronic brake control unit 172 via the speed control unit 161 so that the speed does not exceed the speed limit.

When the driver tries to honk a horn, the function restriction unit 60 refers to the horn prohibition information stored in the function restriction information storage unit 20, and controls the horn 173 via the horn control unit 162 so that the driver cannot honk the horn.

As described in the present embodiment, when release of the restricted function is not necessary even in emergency, the transmitting device 200 may not transmit the mobile-object information including the emergency information.

Alternatively, if the emergency information is included in the mobile-object information, it suffices that the function restriction unit 60 does not release the function restriction.

The benefit information is included in the mobile-object information as well as the function restriction start information and the function restriction information, and is transmitted from the transmitting device 200 installed at the housing complex entrance. When the car passes the housing complex entrance, the receiving unit 10 receives the mobile-object information, and sends the mobile-object information to the information storage unit 50. The function restriction unit 60 stores the benefit information included in the mobile-object information in the temporary storing unit 31 of the benefit information storage unit 30. From the transmitting device 200 installed at the housing complex exit, the mobile-object information including the function restriction release information is transmitted. When the car passes the housing complex exit, the receiving unit 10 receives the mobile-object information including the function restriction release information, and the information storage unit 50 deletes or invalidates the function restriction information stored in the function restriction information storage unit 20. Simultaneously, the information storage unit 50 determines the benefit corresponding to the function restriction practiced in the premise of the housing complex, based on the benefit information stored in the temporary storing unit 31, and accumulates the benefit in the accumulation unit 32 as the accumulated benefit information.

Of course, such a function restriction is effective only for a car which mounts the mobile-object terminal device 100 of the present embodiment. It is preferable that all cars entering the premise of the housing complex are bound in duty to mount the mobile-object terminal device 100 of the present embodiment, and that the entrance gate of the housing complex does not open against cars which do not mount the mobile-object terminal device 100. Then, it is possible to secure the traffic safety and silence in the housing complex.

Although the above explained the practical example in a case where the function restricted area is in the premise of the housing complex, the function restricted area can be an area or a road where a speed regulation or a horn regulation is extremely important, such as a school zone, a hospital surrounding road, a shopping area road, and a motor-highway.

As for another applicable example, there is a mobile-object function restriction system in the freight yard. In the mobile-object function restriction system, the speed control unit 161 of the present embodiment is installed in each freight car of a freight train, and the speed control unit 161 controls the brake of the freight car. The transmitting device 200 operable to transmit function restriction information is installed in a necessary place of a railroad in the freight yard. Each freight car can receive the function restriction information which includes the speed limit information for every railroad section, from the transmitting device 200. Thus, the freight train can run at the specified speed at each railroad section.

As explained above, the main point of the present invention is to realize the mobile-object function restriction system. In the mobile-object function restriction system, the mobile-object terminal device receives and stores mobile-object information which includes function restriction information, benefit information, and emergency information. When the mobile-object terminal device tries to use the function, the mobile-object function restriction system can perform the function restriction, by referring to the function restriction information and the emergency information stored in the information storage unit, and can enjoy the benefit corresponding to the function restriction practiced. As long as it falls in the main point of the present invention, various kinds of applications are possible.

According to the present invention, it is possible to provide the mobile-object terminal device, the mobile-object function restriction system, and the mobile-object function restriction method which are operable to surely perform the function restriction in the function restricted area, to give a benefit corresponding to the function restriction practiced, and to release the function restriction in emergency.

### Industrial Applicability

The mobile-object terminal device and mobile-object function restriction system related to the present invention can be used, for example, in function restriction of a mobile phone in a specified area, speed limit of a vehicle, function restriction of a mobile-object, and the applicable field thereto.

## Claims

1. A mobile-object terminal device comprising:
at least one functional means;
a receiving unit;
an information storage unit;
a function restriction unit; and
an accumulated benefit information reading unit,
wherein said information storage unit comprises:
a function restriction information storage unit;
a benefit information storage unit; and
an emergency information storage unit,
wherein said receiving unit receives mobile-object information including:
function restriction information for use in restricting a function of said at least one of functional means; benefit information for use in determining benefit to be given in compensation for restriction of the function of said at least one of functional means, the restriction being executed according to the function restriction information; and
emergency information to be issued in case of emergency for use in releasing restriction imposed on the function of said at least one of functional means,
wherein said function restriction information storage unit stores the function restriction information included in the mobile-object information received by said receiving unit,
wherein said benefit information storage unit stores temporally the benefit information included in the mobile-object information received by said receiving unit, and stores accumulatively benefit determined on the basis of the benefit information as accumulated benefit information,
wherein said emergency information storage unit stores the emergency information included in the mobile-object information received by said receiving unit,
wherein said function restriction unit, based on the function restriction information stored in said function restriction information storage unit and the emergency information stored in said emergency information storage unit, restricts the execution of the function of said at least one functional means, and at the same time determines, in accordance with the restricted function, the benefit to be accumulatively stored in said benefit information storage unit from the benefit information stored temporally in said benefit information storage unit, and
wherein said accumulated benefit information reading unit, in response to external request, reads out and processes the accumulated benefit information stored in said benefit information storage unit, thereby storing the processed, accumulated benefit information into said benefit information storage unit.

2. The mobile-object terminal device as defined in claim 1, further comprising:
a first power supply of which the electric power supply is able to be switched on and off by a user; and
a second power supply of which the electric power supply is unable to be switched on and off by the user,
wherein said function restriction unit and said at least one of functional means are fed by said first power supply, and
wherein said receiving unit, said information storage unit, and said accumulated benefit information reading unit are fed by said second power supply, and operate independently of said at least one of functional means.

3. The mobile-object terminal device as defined claim 1, wherein, when a function start direction is issued for said at least one of functional means, said function restriction unit restricts the execution of the function by said at least one of functional means to which the function start direction is issued, based on the function restriction information stored in said function restriction information storage unit and the emergency information stored in said emergency information storage unit.

4. The mobile-object terminal device as defined by claim 1, wherein, when said receiving unit receives the mobile-object information, said function restriction information storage unit stores the function restriction information included in the mobile-object information, said emergency information storage unit stores the emergency information included in the mobile-object information, and said benefit information storage unit stores temporally the benefit information included in the mobile-object information,
wherein when a predetermined time elapses after said receiving unit has received the mobile-object information, said function restriction information storage unit deletes or invalidates the function restriction information stored therein, said emergency information storage unit deletes or invalidates the emergency information stored therein, and said benefit information storage unit stores accumulatively benefit determined based on the temporally-stored benefit information as the accumulated benefit information.

5. The mobile-object terminal device as defined in claim 1, wherein the mobile-object information further includes function restriction start information and function restriction release information,
wherein when said receiving unit receives the mobile-object information including the function restriction start information, said function restriction information storage unit stores the function restriction information included in the mobile-object information, said emergency information storage unit stores the emergency information included in the mobile-object information, and said benefit information storage unit stores temporally the benefit information included in the mobile-object information, and
wherein when said receiving unit receives the mobile-object information including the function restriction release information, said function restriction information storage unit deletes or invalidates the function restriction information stored therein, said emergency information storage unit deletes or invalidates the emergency information stored therein, and said benefit information storage unit stores accumulatively benefit determined based on the temporally-stored benefit information as accumulated benefit information.

6. The mobile-object terminal device defined in claim 1, wherein said at least one functional means includes at least one of a communications means, a shooting means, a recording means, and a sounding means.

7. The mobile-object terminal device defined in claim 1, wherein said at least one functional means includes a speed control means operable to control speed of a vehicle.

8. A mobile-object-function restriction system comprising:
a plurality of transmitting devices;
a mobile-object terminal device; and
a read-out device,
wherein each of said plurality of transmitting devices comprises a transmitting unit operable to transmit mobile-object information to a predetermined area, the mobile-object information including: function restriction information for use in restricting functions of said mobile-object terminal device; benefit information for use in determining benefit to be awarded in compensation for restriction of the functions of said mobile-object terminal device, the restriction being executed according to the function restriction information; and emergency information to be issued in case of emergency for use in releasing restriction imposed on the functions of said mobile-object terminal device,
wherein said mobile-object terminal device comprises:
at least one functional means;
a receiving unit;
an information storage unit;
a function restriction unit; and
an accumulated benefit information reading unit,
wherein said information storage unit comprises:
a function restriction information storage unit;
a benefit information storage unit; and
an emergency information storage unit,
wherein said receiving unit receives the mobile-object information transmitted by each of said plurality of transmitting devices,
wherein said function restriction information storage unit stores the function restriction information included in the mobile-object information received by said receiving unit,
wherein said benefit information storage unit stores temporally the benefit information included in the mobile-object information received by said receiving unit, and stores accumulatively benefit determined on the basis of the benefit information as accumulated benefit information,
wherein said emergency information storage unit stores the emergency information included in the mobile-object information received by said receiving unit,
wherein said function restriction unit, based on the function restriction information stored in said function restriction information storage unit and the emergency information stored in said emergency information storage unit, restricts the execution of the function of said at least one functional means, and at the same time determines, in accordance with the restricted function, the benefit to be accumulatively stored in said benefit information storage unit from the benefit information stored temporally in said benefit information storage unit,
wherein said accumulated benefit information reading unit, in response to request by said read-out device, reads out and processes the accumulated benefit information stored in said benefit information storage unit, thereby storing the processed, accumulated benefit information into said benefit information storage unit, and
wherein said read-out device acquires the accumulated benefit information stored in said benefit information storage unit, by requesting said accumulated benefit information reading unit.

9. The mobile-object-function restriction system as defined in claim 8, wherein the mobile-object information further includes function restriction start information to validate the function restriction information and function restriction release information to invalidate the function restriction information, and
wherein, in the predetermined area with an entrance and an exit, the entrance being provided with one of said plurality of transmitting devices as an entrance transmitting device and the exit being provided with another of said plurality of transmitting devices as an exit transmitting device, the entrance transmitting device transmits the mobile-object information including the function restriction start information, and the exit transmitting device transmits the mobile-object information including the function restriction release information.

10. The mobile-object-function restriction system as defined in claim 8,
wherein said plurality of transmitting devices transmit separately the mobile-object information including both the function restriction information and the benefit information, and the mobile-object information including the emergency information.

11. The mobile-object-function restriction system as defined in claim 8,
wherein communications between said mobile-object terminal device and said plurality of transmitting devices are performed by noncontact technique.

12. A mobile-obj ect-function restriction method comprising:
a function executing step of executing at least one of functions of a mobile-object terminal device;
a transmitting step of transmitting mobile-object information to a predetermined area, the mobile-object information including: function restriction information for use in restricting functions to be executed in said function executing step; benefit information for use in determining benefit to be awarded in compensation for restriction of the at least one of functions, the restriction being executed according to the function restriction information; and emergency information to be issued in case of emergency for use in releasing restriction imposed on the at least one of functions;
a receiving step of receiving the mobile-object information transmitted in said transmitting step;
a storing step of storing the mobile-object information received in said receiving step;
a controlling step of controlling functions to be executed in said function executing step, based on the function restriction information and emergency information included in the mobile-object information stored in said storing step; and
an accumulating step of accumulating, as accumulated benefit information, benefit determined on the basis of the benefit information included in the mobile-object information stored in said storing step, corresponding to the functions restricted in said controlling step.

13. The mobile-object-function restriction method as defined in claim 12,
wherein when function start direction is issued in said function executing step, said controlling step includes restricting a function to which the function start direction is issued, based on the function restriction information and emergency information included in the mobile-object information stored in said storing step.

14. The mobile-object-function restriction method as defined in claim 12,
wherein when the mobile-object information is received in said receiving step, said storing step includes storing the mobile-object information received, and
wherein when a predetermined time elapses after the mobile-object information has been received in said receiving step, said storing step includes deleting or invalidating the function restriction information and emergency information included in the mobile-object information stored, and said accumulating step includes accumulating, as accumulated benefit information, benefit determined based on the benefit information included in the mobile-object information stored.

15. The mobile-object-function restriction method as defined in claim 12,
wherein the mobile-object information further includes function restriction start information and function restriction start information,
wherein when the mobile-object information including the function restriction start information is received in said receiving step, said storing step includes storing the mobile-object information received, and
wherein when the mobile-object information including the function restriction release information is received in said receiving step, said storing step includes deleting or invalidating the function restriction information and emergency information included in the mobile-object information stored and said accumulating step includes accumulating, as accumulated benefit information, benefit determined based on the benefit information included in the mobile-object information stored.

16. The mobile-object-function restriction method as defined in claim 12,
wherein said transmitting step includes transmitting separately the mobile-object information including both the function restriction information and the mobile-object information and the mobile-object information including the emergency information.

17. The mobile-object-function restriction method as defined in claim 12,
wherein the function to be executed in said function executing step includes at least one of a communicating function, a shooting function, and a sounding function.

18. The mobile-object-function restriction method as defined in claim 12,
wherein the function to be executed in said function executing step includes a speed control function to control speed of a vehicle.

19. A recording medium storing, in a computer readable manner, a program describing a mobile-object-function restriction method, the mobile-object-function restriction method comprising:
a function executing step of executing at least one of functions of a mobile-object terminal device;
a transmitting step of transmitting mobile-object information to a predetermined area, the mobile-object information including: function restriction information for use in restricting functions to be executed in said function executing step; benefit information for use in determining benefit to be awarded in compensation for restriction of the at least one of functions, the restriction being executed according to the function restriction information; and emergency information to be issued in case of emergency for use in releasing restriction imposed on the at least one of functions;
a receiving step of receiving the mobile-object information transmitted in said transmitting step;
a storing step of storing the mobile-object information received in said receiving step;
a controlling step of controlling functions to be executed in said function executing step, based on the function restriction information and emergency information included in the mobile-object information stored in said storing step; and
an accumulating step of accumulating, as accumulated benefit information, benefit determined on the basis of the benefit information included in the mobile-object information stored in said storing step, in correspondence with the function restricted in said controlling step.
